# FASCICULE DE BREVET EUROPEEN

(11) **EP 0 864 470 B1**
(45) Date de publication et mention de la délivrance du brevet: **17.10.2001**
(21) Numéro de dépôt: 98400496.0
(22) Date de dépôt: 03.03.1998
(51) Int. Cl.: B60R 21/26

(54) **Générateur pyrotechnique de gaz à débit et volume adaptables pour coussin de protection**
Pyrotechnischer Gasgenerator mit anpassbarer Durchflussmenge und Volumen für ein Sicherheitskissen
Pyrotechnic gas generator with adaptable flow and volume for a safety bag

(30) Priorité: 14.03.1997 FR 9703062
(43) Date de publication de la demande: 16.09.1998
(73) Titulaire: LIVBAG S.N.C., 91710 Vert Le Petit (FR)
(72) Inventeur: Perotto, Christian, 91610 Ballancourt (FR)
(74) Mandataire: Pech, Bernard

(56) Documents cités:
- EP-A- 0 428 298
- EP-A- 0 733 519
- EP-A- 0 757 026
- US-A- 5 219 178

## Description

L'invention se rapporte au domaine de la sécurité automobile et concerne plus particulièrement un générateur pyrotechnique de gaz chauds pour gonfler des coussins de protection.

Récemment, de nouveaux générateurs sont apparus et permettent, au moyen de deux initiateurs électriques placés dans deux chambres de combustion séparées, d'adapter le débit du générateur en fonction de différents paramètres comme la température, la nature et l'intensité du choc, la taille et la position du passager. Le déclenchement des deux initiateurs est généralement décalé dans le temps de quelques millisecondes. Ce décalage se fait électroniquement et de façon programmée dans le temps de manière à optimiser le débit du générateur et donc le niveau de pression obtenu dans le sac.

Le brevet US 5 219 178 décrit un générateur pyrotechnique de gaz chauds pour "passager" qui comprend deux chambres de combustion comportant chacune un chargement pyrotechnique et un initiateur et qui sont séparées l'une de l'autre par une chambre de diffusion. Lors d'un choc, une première chambre de combustion est allumée à l'aide d'un initiateur et les gaz générés par la combustion du chargement pyrotechnique parviennent, après filtration, dans la chambre de diffusion. Ces gaz provoquent ainsi, dans un délai de l'ordre de vingt millisecondes, une phase de gonflage lente du coussin de protection, ce qui permet de positionner correctement le passager sur son siège. La seconde chambre de combustion est alors initiée et il s'ensuit une phase de gonflage rapide du coussin qui assure le déploiement total du coussin. Mais ce générateur, qui permet de moduler la vitesse de gonflage du coussin, ne peut limiter, selon les circonstances, le volume de gaz final libéré dans le coussin.

La demande de brevet européen EP 0 428 298, qui forme l'état de la technique, le plus proche divulgue un générateur pyrotechnique de gaz chauds dont le corps est constitué par deux cylindres distincts de longueurs différentes emmanchés sur un système de liaison. Ce générateur présente ainsi deux chambres de combustion qui encadrent une chambre de diffusion et qui sont chacune séparées de cette dernière par une plaque métallique soutenue par le système de liaison. Selon la sévérité du choc, il est alors possible d'initier soit l'une des deux chambres de combustion au choix, soit les deux chambres simultanément. Ainsi, ce système permet de limiter le volume de gaz généré, mais en revanche ne permet pas de modifier la vitesse de gonflage du coussin de protection. De plus, la fabrication d'un tel générateur est relativement complexe, ce qui restreint considérablement son application dans le domaine de la sécurité automobile.

L'homme de métier est donc à la recherche d'un générateur pyrotechnique de gaz dont la fabrication est aisée et d'un coût peu élevé permettant, selon les cas, soit de ne libérer qu'un certain volume de gaz et donc de ne gonfler le coussin de protection que partiellement, soit de libérer un volume de gaz maximum afin de gonfler totalement le coussin avec la possibilité de réguler la vitesse de gonflage.

L'invention concerne donc un générateur pyrotechnique de gaz chauds destiné à la sécurité automobile comprenant notamment un tube cylindrique présentant une paroi latérale dont la longueur des génératrices est supérieure à son diamètre extérieur, ledit tube est fermé à chacune de ses extrémités par une bague de fermeture dans laquelle est inséré un système d'allumage, deux chargements pyrotechniques et deux systèmes d'allumage, deux cloisons internes portant chacune une tuyère initialement obturée sont fixées dans ladite paroi latérale de manière à diviser ledit tube en une partie amont continue, une partie intermédiaire munie de trous et une partie aval continue, lesdites partie amont et partie aval contenant chacune un chargement pyrotechnique, et une valve de sécurité qui est en appui contre la cloison et fixée dans la paroi latérale à la limite entre la partie intermédiaire et la partie aval du tube de manière à isoler la partie aval des gaz provenant de la partie amont caractérisé en ce que,
- le tube est monobloc,
- les cloisons et la valve de sécurité sont serties dans la paroi latérale.

Selon une caractéristique de l'invention, la valve de sécurité impose donc que l'allumage du chargement pyrotechnique contenu dans la partie aval ne peut avoir lieu qu'en raison de la mise à feu du système d'allumage logé dans ladite partie aval. Il est ainsi possible :
- soit de ne libérer qu'un volume de gaz limité, et donc de ne gonfler le coussin que partiellement, en initiant uniquement le système d'allumage logé dans la partie amont,
- soit de gonfler totalement le coussin de protection en initiant les deux systèmes d'allumage simultanément ou avec un certain décalage dans le temps, la mise à feu décalée permettant de moduler la vitesse de gonflage du coussin.

Préférentiellement, le chargement pyrotechnique est constitué soit par une composition pyrotechnique choisie dans le groupe des compositions dites "à double base", c'est-à-dire les compositions à base de nitrocellulose et de nitroglycérine, soit par une composition pyrotechnique composite à base d'un liant organique et d'au moins une charge oxydante.

Avantageusement, chaque chargement pyrotechnique est isolé de la paroi latérale par une enveloppe cylindrique. Ainsi, l'inconvénient que présentent les compositions dites "à double base" et qui consiste en ce qu'elles se détériorent au cours du temps au contact d'un matériau ferreux est évité, ce qui assure une combustion correcte et fiable du chargement pyrotechnique. En outre, lorsque le chargement pyrotechnique est constitué par une composition pyrotechnique composite, l'enveloppe cylindrique qui contient ledit chargement pyrotechnique permet de maintenir une pression suffisante pour garantir l'allumage du chargement et de protéger le chargement contre l'humidité ambiante.

Préférentiellement, la partie intermédiaire munie de trous constitue un diffuseur.

Selon une deuxième caractéristique, dans lesdites partie amont et partie aval, une grille de filtration et d'appui est placée entre le chargement pyrotechnique et la tuyère obturée.

Selon une troisième caractéristique, dans lesdites partie amont et partie aval, un ressort est placé entre la bague de fermeture et le chargement pyrotechnique de manière à caler ledit chargement contre la grille de filtration.

Selon un premier mode de réalisation préférée, dans lesdites partie amont et partie aval, l'enveloppe cylindrique enserre le ressort, le chargement pyrotechnique et la grille de filtration. L'enveloppe cylindrique se présente alors sous la forme d'un boîtier cylindrique comportant une extrémité fermée plaquée contre la tuyère et faisant office d'opercule claquable.

Selon un second mode de réalisation préférée, dans lesdites partie amont et partie aval, l'enveloppe cylindrique se présente sous la forme d'une enveloppe tubulaire ne contenant que le chargement pyrotechnique, la tuyère étant alors obturée par un opercule claquable distinct.

Avantageusement, un condenseur cylindrique est plaqué, dans la partie intermédiaire, contre la paroi latérale interne du tube. Le condenseur peut par exemple être constitué par un enroulement de grilles.

Préférentiellement, chaque chargement pyrotechnique est sous la forme d'un bloc cylindrique perforé par une pluralité de canaux parallèles à l'axe dudit bloc de manière à ce que lesdit canaux soient parallèles à l'axe de révolution du tube.

Selon un troisième mode de réalisation préférée, la valve de sécurité est logée dans la partie intermédiaire, face à la cloison sertie dans la paroi latérale à la limite entre la paroi intermédiaire et la partie aval du tube. Préférentiellement, la valve de sécurité est constituée par une pièce cylindrique monobloc comprenant une couronne périphérique reliée par une languette à un disque central dont la surface est au moins égale à la section de sortie de la tuyère portée par ladite cloison.

Un générateur selon l'invention présente donc les deux avantages suivants :
- D'une part, la fabrication ne met en oeuvre qu'un faible nombre de pièces dont l'assemblage peut être facilement automatisé, ce qui permet de réduire très sensiblement les coûts de fabrication, tout en garantissant un gonflage correct et fiable du coussin de protection.
- D'autre part, le fait de pouvoir jouer sur le volume de gaz généré ou sur la vitesse de gonflage du coussin assure une protection adaptée à la sévérité du choc.

On donne ci-après une description détaillée du mode préféré de réalisation en ce référant aux figures 1 à 3.

La figure 1 est une vue en coupe longitudinale d'un générateur selon l'invention.

La figure 2 est une vue partiellement éclatée en perspective du générateur représenté à la figure 1.

La figure 3 est une vue en perspective de la valve de sécurité du générateur représenté aux figures 1 et 2.

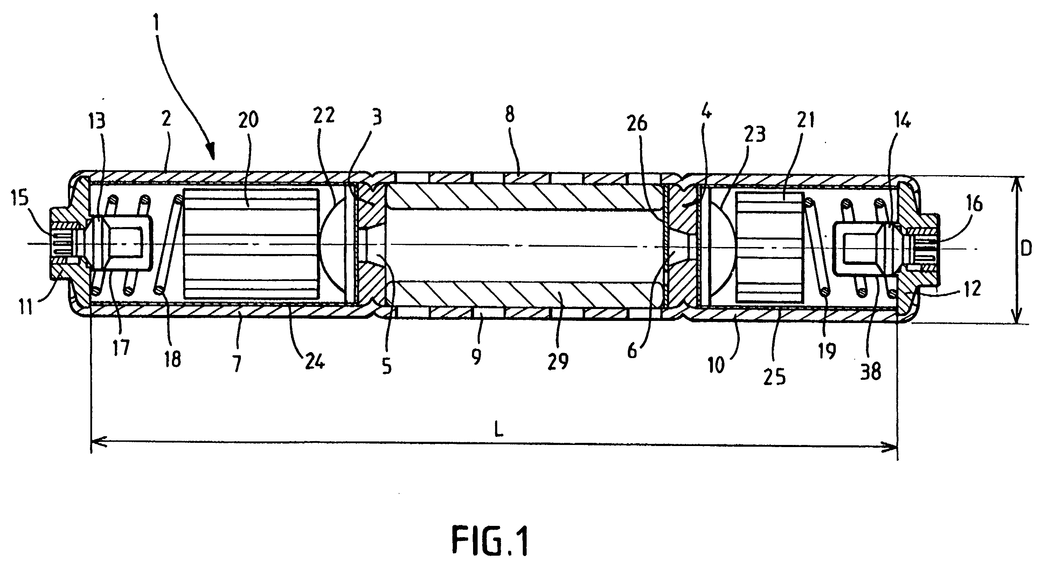

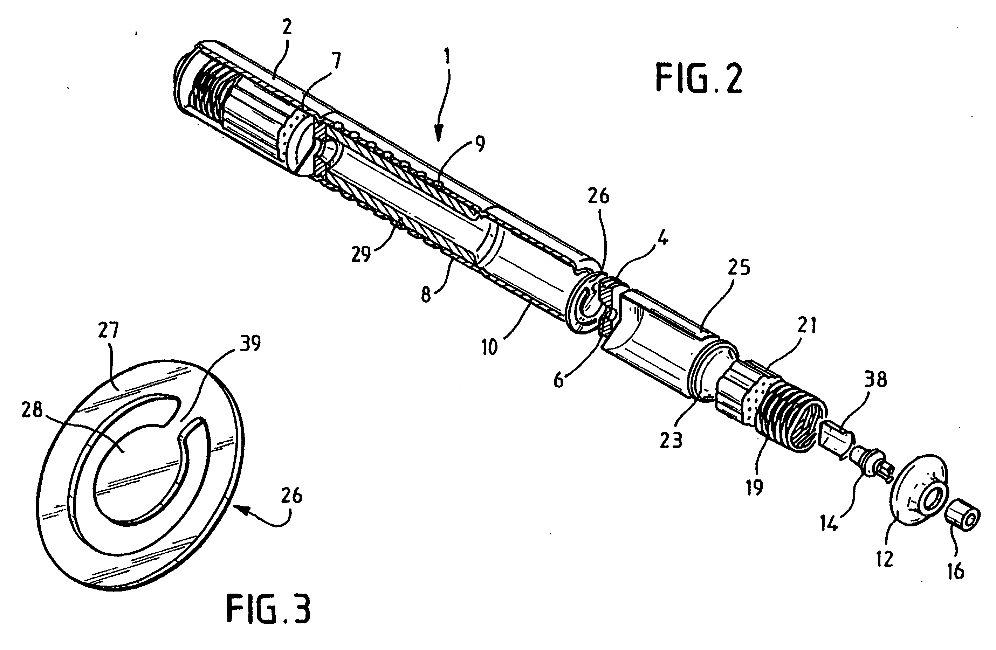

En se reportant aux figures 1 à 3, nous observons qu'un générateur pyrotechnique de gaz chauds selon l'invention comporte un tube 1 cylindrique constitué dans un métal suffisamment ductile pour pouvoir être serti, c'est-à-dire un métal présentant préférentiellement une capacité d'allongement supérieure à 20% et une résistance à la rupture supérieure à 400 MPa. Ce tube 1 comporte deux extrémités ouvertes et présente une paroi latérale 2 dont la longueur L des génératrices est supérieure à son diamètre extérieur D. Dans l'exemple représenté aux figures 1 et 2, la longueur L est sensiblement égale à six fois la diamètre extérieur D. Deux cloisons 3,4 internes portant chacune une tuyère 5,6 sont serties dans la paroi latérale 2 de manière à diviser le tube 1 en une partie amont 7 continue, une partie intermédiaire 8 munie de trous 9 et une partie aval 10 continue.

Dans chacune desdites partie amont 7 et partie aval 10, l'extrémité ouverte du tube 1 est fermée par une bague de fermeture 11, 12 dans laquelle est inséré un inflammateur 13, 14 électrique dont la prise est protégée par un shunt 15, 16. L'inflammateur 13, 14 est surmonté par un capuchon 17,38 métallique fragmentable contenant une poudre d'allumage, comme par exemple une poudre du type bore/nitrate de potassium, et est entouré par un ressort 18, 19 hélicoïdal. Ce ressort 18, 19 est en appui à la fois contre la bague de fermeture 11,12 et contre une extrémité d'un bloc 20,21 cylindrique qui constitue le chargement pyrotechnique et qui est perforé par dix-neuf canaux parallèles à l'axe du bloc 20,21, celui-ci étant confondu avec l'axe de révolution du tube 1. L'autre extrémité du bloc 20,21 vient en butée contre une grille de filtration 22,23 convexe par rapport audit bloc 20,21. Un boîtier 24,25 cylindrique présentant une extrémité ouverte en appui contre la bague de fermeture 11, 12 et une extrémité fermée plaquée contre la cloison 3,4 interne sert d'opercule claquable à la tuyère 5,6 portée par cette dernière et enserre le ressort 18,19, le bloc 20,21 et la grille de filtration 22, 23.

Avantageusement, la longueur de la partie amont 7 est supérieure à celle de la partie aval 10, et le bloc 20 situé dans ladite partie amont 7 est plus important que celui logé dans ladite partie aval 10.

Une valve de sécurité 26, constituée par une pièce cylindrique monobloc réalisée en métal et comprenant une couronne périphérique 27 reliée par une languette 39 à un disque central 28 dont la surface est au moins égale à la section de sortie de la tuyère 6, est placée dans la partie intermédiaire 8 face à la cloison 4 qui est sertie dans la paroi latérale 2 à la limite entre la partie intermédiaire 8 et la partie aval 10 du tube 1. Le disque central 28 obture alors l'orifice de sortie de la tuyère 6. Un condenseur 29 cylindrique poreux, par exemple réalisé à l'aide d'un enroulement de grilles, est plaqué contre la paroi latérale 2 interne dans la partie intermédiaire 8 et présente d'une part, une extrémité ouverte en appui contre la cloison 3 sertie dans la paroi latérale 2 à la limite entre la partie amont 7 et la partie intermédiaire 8, et d'autre part, une autre extrémité ouverte en appui contre la valve de sécurité 26.

Un tel générateur, couplé à un système de détection à fonctions multiples, autorise les schémas de fonctionnement suivants. Lors d'un choc léger, un signal émis par un détecteur de collision déclenche la mise à feu de l'inflammateur 13 de la partie amont 7 qui allume alors la poudre d'allumage. Les gaz de combustion qui sont générés provoquent l'éclatement du capuchon 17 et viennent au contact du bloc 20, entraînant ainsi l'allumage dudit bloc 20. Lorsque la pression atteint la valeur de rupture du boîtier 24 qui obture la tuyère 5, ce dernier se rompt au voisinage de ladite tuyère 5 et les gaz pénètrent dans la partie intermédiaire 8 du tube 1, passent à travers le condenseur 29 poreux et s'échappent par les trous 9 pour gonfler le coussin de protection. La valve de sécurité 26, compte-tenu de sa disposition dans la partie intermédiaire 8, permet alors d'éviter que les gaz chauds qui sont générés par le bloc 20 de la partie amont 7 ne viennent rompre le boîtier 25 de la partie aval 10 au voisinage de la tuyère 6 et ainsi provoquer l'allumage du bloc 21.

Si le choc est plus important, l'inflammateur 14 de la partie aval 10 est mis à feu à la suite de l'inflammateur 13 selon un retard programmé dans le temps. De façon analogue, le bloc 21 est allumé et, lorsque la pression atteint un certain seuil, le boîtier 25 se rompt au voisinage de la tuyère 6. Les gaz générés exercent alors une pression sur le disque central 28 de la valve de sécurité 26, ce qui entraîne une pliure de la languette 39 dans le sens du flux de gaz. Les gaz pénètrent ainsi dans la partie intermédiaire 8 pour finalement gonfler le coussin de protection.

Enfin, lorsque le choc est sévère, les deux inflammateurs 13 et 14 sont initiés simultanément, et provoquent la combustion simultanée des blocs 20 et 21.

## Revendications

1. Générateur pyrotechnique de gaz chauds destiné à la sécurité automobile comprenant notamment un tube (1) cylindrique présentant une paroi latérale (2) dont la longueur (L) des génératrices est supérieure à son diamètre extérieur (D), ledit tube (1) est fermé à chacune de ses extrémités par une bague de fermeture (11,12) dans laquelle est inséré un système d'allumage (13,14), deux chargements pyrotechniques et deux systèmes d'allumage (13,14), deux cloisons (3,4) internes portant chacune une tuyère (5,6) initialement obturée sont fixées dans ladite paroi latérale (2) de manière à diviser ledit tube (1) en une partie amont (7) continue, une partie intermédiaire (8) munie de trous (9) et une partie aval (10) continue, lesdites partie amont (7) et partie aval (10) contenant chacune un chargement pyrotechnique, et une valve de sécurité (26) qui est en appui contre la cloison (4) et fixée dans la paroi latérale (2) à la limite entre la partie intermédiaire (8) et la partie aval (10) du tube (1) de manière à isoler la partie aval (10) des gaz provenant de la partie amont (7), **caractérisé en ce que**,
- le tube est monobloc,
- les cloisons et la valve de sécurité sont serties dans la paroi latérale.

2. Générateur selon la revendication 1, **caractérisé en ce que** chaque chargement pyrotechnique est isolé de la paroi latérale (2) par une enveloppe (24,25) cylindrique.

3. Générateur selon la revendication 2, **caractérisé en ce que** la partie intermédiaire (8) munie de trous (9) constitue un diffuseur.

4. Générateur selon la revendication 3, **caractérisé en ce que**, dans lesdites partie amont (7) et partie aval (10), une grille de filtration et d'appui (22,23) est placée entre le chargement pyrotechnique et la tuyère (5,6) obturée.

5. Générateur selon la revendication 4, **caractérisé en ce que**, dans lesdites partie amont (7) et partie aval (10), un ressort (18,19) est placé entre la bague de fermeture (11,12) et le chargement pyrotechnique de manière à caler ledit chargement contre la grille de filtration (22,23).

6. Générateur selon la revendication 5, **caractérisé en ce que**, dans lesdites partie amont (7) et partie aval (10), l'enveloppe (24,25) cylindrique enserre le ressort (18,19), le chargement pyrotechnique et la grille de filtration (22,23).

7. Générateur selon l'une quelconque des revendications 5 ou 6, **caractérisé en ce qu'**un condenseur (29) cylindrique est plaqué, dans la partie intermédiaire (8), contre la paroi latérale (2) interne du tube (1).

8. Générateur selon la revendication 1, **caractérisé en ce que** chaque chargement pyrotechnique est sous la forme d'un bloc (20,21) cylindrique perforé par une pluralité de canaux parallèles à l'axe dudit bloc (20,21) de manière à ce que lesdits canaux soient parallèles à l'axe de révolution du tube (1).

9. Générateur selon la revendication 1, **caractérisé en ce que** la valve de sécurité (26) est logée dans la partie intermédiaire (8), face à la cloison (4) sertie dans la paroi latérale (2) à la limite entre la partie intermédiaire (8) et la partie aval (10) du tube (1).

10. Générateur selon la revendication 9, **caractérisé en ce que** la valve de sécurité (26) est constituée par une pièce cylindrique monobloc comprenant une couronne périphérique (27) reliée par une languette (39) à un disque central (28) dont la surface est au moins égale à la section de sortie de la tuyère (6) portée par la cloison (4).

## Patentansprüche

1. Pyrotechnischer Heißgas-Generator für die Fahrzeugsicherheit, der insbesondere ein zylindrisches Rohr (1) mit einer Seitenwand (2), deren äußere Länge (L) größer ist als sein Außendurchmesser (D), wobei das Rohr (1) an jedem seiner Enden von einem Schließring (11, 12) verschlossen wird, in den ein Zündsystem (13, 14) eingefügt ist, zwei pyrotechnische Ladungen und zwei Zündsysteme (13, 14), zwei innere Trennwände (3, 4), die je eine ursprünglich verschlossene Düse (8, 6) aufweisen und so in der Seitenwand (2) befestigt sind, daß das Rohr (1) in einen durchgehenden vorderen Bereich (7), einen mit Löchern (9) versehenen mittleren Bereich (8) und einen durchgehenden hinteren Bereich (10) aufgeteilt wird, wobei der vordere Bereich (7) und der hintere Bereich (10) je eine pyrotechnische Ladung enthalten, und ein Sicherheitsventil (26) aufweist, das gegen die Trennwand (4) anliegt und in der Seitenwand (2) an der Grenze zwischen dem Zwischenbereich (8) und dem hinteren Bereich (10) des Rohrs (1) befestigt ist, um den hinteren Bereich (10) von den Gasen zu isolieren, die vom vorderen Bereich (7) kommen, **dadurch gekennzeichnet, daß**
- das Rohr aus einem Stück besteht,
- die Trennwände und das Sicherheitsventil in die Seitenwand eingefalzt sind.

2. Generator nach Anspruch 1, **dadurch gekennzeichnet, daß** jede pyrotechnische Ladung durch eine zylindrische Hülle (24, 25) von der Seitenwand (2) isoliert wird.

3. Generator nach Anspruch 2, **dadurch gekennzeichnet, daß** der mit Löchern (9) versehene Zwischenbereich (8) einen Diffusor bildet.

4. Generator nach Anspruch 3, **dadurch gekennzeichnet, daß** im vorderen Bereich (7) und im hinteren Bereich (10) ein Filtrier- und Stützgitter (22, 23) zwischen der pyrotechnischen Ladung und der verschlossenen Düse (5, 6) angeordnet ist.

5. Generator nach Anspruch 4, **dadurch gekennzeichnet, daß** im vorderen Bereich (7) und im hinteren Bereich (10) eine Feder (18, 19) zwischen dem Schließring (11, 12) und der pyrotechnischen Ladung so angeordnet ist, daß sie die Ladung gegen das Filtriergitter (22, 23) klemmt.

6. Generator nach Anspruch 5, **dadurch gekennzeichnet, daß** im vorderen Bereich (7) und im hinteren Bereich (10) die zylindrische Hülle (24, 25) die Feder (18, 19), die pyrotechnische Ladung und das Filtriergitter (22, 23) umklammert.

7. Generator nach einem der Ansprüche 5 oder 6, **dadurch gekennzeichnet, daß** ein zylindrischer Kondensator (29) im Zwischenbereich (8) gegen die innere Seitenwand (2) des Rohrs (1) angelegt ist.

8. Generator nach Anspruch 1, **dadurch gekennzeichnet, daß** jede pyrotechnische Ladung in Form eines zylindrischen Blocks (20, 21) vorliegt, der mehrere parallel zur Achse des Blocks (20, 21) verlaufende Kanäle aufweist, derart, daß diese Kanäle parallel zur Drehachse des Rohrs (1) liegen.

9. Generator nach Anspruch 1, **dadurch gekennzeichnet, daß** das Sicherheitsventil (26) im Zwischenbereich (8) vor der Trennwand (4) angeordnet ist, die in die Seitenwand (2) an der Grenze zwischen dem Zwischenbereich (8) und dem hinteren Bereich (10) des Rohrs (1) gefalzt ist.

10. Generator nach Anspruch 9, **dadurch gekennzeichnet, daß** das Sicherheitsventil (26) aus einem einstückigen, zylindrischen Bauteil besteht, das einen Umfangsring (27) aufweist, der über eine Zunge (39) mit einer zentralen Scheibe (28) verbunden ist, deren Oberfläche mindestens gleich dem Ausgangsquerschnitt der Düse (6) ist, die von der Trennwand (4) getragen wird.

## Claims

1. Pyrotechnic hot gas generator designed for automobile safety, comprising in particular a cylindrical tube (1), which has a lateral wall (2), the length (L) of the generatrices of which is greater than its outer diameter (D), the said tube (1) is closed at each of its ends by a closure ring (11, 12), in which an ignition system (13, 14) is inserted, two pyrotechnic charges and two ignition systems (13, 14), two internal partitions (3, 4) each supporting a pipe (5, 6) which is initially closed, are secured in the said lateral wall (2), such as to divide the said tube (1) into a continuous upstream part (7), an intermediate part (8) which is provided with holes (9) and a continuous downstream part (10), the said upstream part (7) and downstream part (10) each containing a pyrotechnic charge, and a safety valve (26), which is supported against the partition (4), and is secured in the lateral wall (2), at the limit between the intermediate part (8) and the downstream part (10) of the tube (1), such as to isolate the downstream part (10) from the gases obtained from the upstream part (7), **characterised in that**:
- the tube is monoblock; and
- the partitions and the safety valve are crimped in the lateral wall.

2. Generator according to claim 1, **characterised in that** each pyrotechnic charge is isolated from the lateral wall (2) by a cylindrical envelope (24, 25).

3. Generator according to claim 2, **characterised in that** the intermediate part (8), which is provided with holes (9), contains a diffuser.

4. Generator according to claim 3, **characterised in that**, in the said upstream (7) and downstream (10) parts, a filtering and support grid (22, 23) is placed between the pyrotechnic charge and the closed pipe (5, 6).

5. Generator according to claim 4, **characterised in that**, in the said upstream (7) and downstream (10) parts, a spring (18, 19) is placed between the closure ring (11, 12) and the pyrotechnic charge, such as to wedge the said charge against the filtering grid (22, 23).

6. Generator according to claim 5, **characterised in that**, in the said upstream (7) and downstream (10) parts, the cylindrical envelope encloses the spring (18, 19), the pyrotechnic charge, and the filtering grid (22, 23).

7. Generator according to claim 5 or claim 6, **characterised in that** a cylindrical condenser (29) is placed in the intermediate part (8), against the inner lateral wall (2) of the tube (1).

8. Generator according to claim 1, **characterised in that** each pyrotechnic charge is in the form of a cylindrical block (20, 21), which is perforated by a plurality of channels, parallel to the axis of the said block (20, 21), such that the said channels are parallel to the axis of revolution of the tube (1).

9. Generator according to claim 1, **characterised in that** the safety valve (26) is accommodated in the intermediate part (8), opposite the partition (4), which is crimped in the lateral wall (2), at the limit between the intermediate part (8) and the downstream part (10) of the tube (1).

10. Generator according to claim 9, **characterised in that** the safety valve (26) consists of a monoblock cylindrical part, comprising a peripheral ring (27), which is connected by a tongue (39) to a central disc (28), the surface of which is at least equivalent to the outlet cross-section of the pipe (6), which is supported by the partition (4).
